# EUROPEAN PATENT APPLICATION

(11) **EP 4 685 654 A1**
(43) Date of publication of application: **28.01.2026**
(21) Application number: 25188998.6
(22) Date of filing: 11.07.2025
(51) Int. Cl.: G06F 12/02

(54) **ELECTRONIC DEVICE FOR ROUTING MEMORY ADDRESS AND METHOD OF OPERATING THEREOF**

(30) Priority: 24.07.2024 KR 20240097680
(71) Applicant: Samsung Electronics Co., Ltd., Suwon-si, Gyeonggi-do 16677 (KR)
(72) Inventor: Kim, Hyunsoo, 16678 Suwon-si, Gyeonggi-do (KR); Kim, Junkyum, 16678 Suwon-si, Gyeonggi-do (KR); Paik, Yoonah, 16678 Suwon-si, Gyeonggi-do (KR); Cha, Sanghoon, 16678 Suwon-si, Gyeonggi-do (KR); Choi, Yeonkyu, 16678 Suwon-si, Gyeonggi-do (KR)
(74) Representative: Grünecker Patent- und Rechtsanwälte PartG mbB

(57) **Abstract**

An electronic device includes a routing register configured to store mapping information that maps each of predetermined designated memory addresses representing a partial area of a memory to a redirected memory address representing another partial area of the memory, and a selection logic configured to, when an input memory address included in a memory command received from a host processor corresponds to one of the designated memory addresses, convert the input memory address into a redirected memory address that is mapped onto the corresponding designated memory address based on the mapping information, wherein the memory command is executed at the converted redirected memory address.

## Description

### 1. Technical Field

The following description is direct to an electronic device for routing a memory address and a method of operating thereof.

### 2. Discussion of Related Art

A general semiconductor memory device is functionally separate from a processor for performing an arithmetic operation. Accordingly, a bottleneck may occur when a large amount of data is exchanged between the semiconductor memory device and the processor, especially when implementing applications, such as a neural network, big data, or Internet of Things (IoT).

Processing in memory (PIM) is an architectural approach where at least part of the arithmetic operation is performed directly within the memory, which may reduce or eliminate this bottleneck.

### SUMMARY

The invention is claimed in the independent claims. Preferred embodiments are specified in the dependent claims.

According to an embodiment, an electronic device includes a routing register configured to store mapping information that maps each of predetermined designated memory addresses representing a partial area of a memory to a redirected memory address representing another partial area of the memory, and a selection logic configured to, when an input memory address included in a memory command received from a host processor corresponds to one of the designated memory addresses, convert the input memory address into a redirected memory address that is mapped to the corresponding designated memory address based on the mapping information, wherein the memory command is executed at the converted redirected memory address.

In an embodiment, when processing in memory (PIM) operations are performed on a target PIM tile of a PIM file corresponding to the converted redirected memory address, a plurality of redirected memory addresses stored in the routing register is updated to a plurality of redirected memory addresses corresponding to a next PIM tile of the PIM file.

In an embodiment, a PIM operation corresponding to the memory command is performed on data at the converted redirected memory address.

In an embodiment, the electronic device further includes a control register configured to transmit, to the selection logic, an activation signal for the routing register, wherein the selection logic selects one of the input memory address and the mapped redirected memory address according to the activation signal.

In an embodiment, the selection logic is configured to determine whether the input memory address matches a given address among the designated memory addresses, when the input memory address matches the given address, convert the input memory address into a redirected memory address that is mapped to the given address and output the redirected memory address, and when the input memory address does not match the given address, output the input memory address.

In an embodiment, the selection logic is configured to determine whether the input memory address corresponds to one of the designated memory addresses based on some bits of the input memory address.

In an embodiment, the mapping information maps each of the predetermined designated memory addresses to the redirected memory address and a PIM command to be executed at the redirected memory address, and the selection logic is configured to update the memory command to a **PIM** command that is mapped to the corresponding designated memory address, based on the mapping information.

**In** an embodiment, non-cacheable access to an area corresponding to the designated memory addresses is allowed in the memory, and cacheable access to an area corresponding to the redirected memory address is allowed in the memory.

**In** an embodiment, the input memory address, designated memory addresses stored in the routing register, and the redirected memory addresses are expressed as row addresses.

**In** an embodiment, in the mapping information, each of the designated memory addresses is one-to-one mapped to a redirected memory address.

**In** an embodiment, the electronic device further includes the host processor, and a memory controller configured to generate the memory command in response to a memory request received from the host processor, wherein the routing register and the selection logic are included in the memory controller, and the memory receives the converted redirected memory address from the memory controller.

According to an embodiment, a method of operating an electronic device includes determining whether an input memory address included in a memory command received from a host processor corresponds to one of predetermined designated memory addresses, and when the input memory address corresponds to one of the designated memory addresses, converting the input memory address into a redirected memory address that is mapped to the corresponding designated memory address, based on mapping information stored in a routing register, wherein the mapping information maps each of the designated memory addresses representing a partial area of a memory to a redirected memory address representing another partial area of the memory, and the memory command is executed at the converted redirected memory address.

According to an embodiment, a memory device includes a routing register and selection logic. The routing register is configured to store mapping information that maps each of predetermined designated memory addresses representing a first region of a memory to a redirected memory address representing a second other region of the memory. The selection logic is configured to determine whether an input memory address received in a memory command corresponds to a given address among the designated memory addresses, based on some bits of the input memory address. The memory device executes the memory command at the input address when the input address does not correspond to the given address and otherwise executes the memory command at the redirected memory address.

### BRIEF DESCRIPTION OF THE DRAWINGS

FIG. 1 is a diagram illustrating an electronic device according to an embodiment.
FIG. 2 is a diagram illustrating a row router according to an embodiment.
FIG. 3 is a diagram illustrating a memory area according to an embodiment.
FIG. 4 is a diagram illustrating a configuration and an operation of a row router according to an embodiment.
FIG. 5 is a diagram illustrating a routing register file according to an embodiment.
FIGS. 6 and 7 are diagrams illustrating a row router using some bits representing a memory address according to an embodiment.
FIG. 8 is a diagram illustrating a row router included in a memory controller according to an embodiment.
FIG. 9 is a diagram illustrating a row router that updates a memory command to a PIM command according to an embodiment.
FIG. 10 is a diagram illustrating a mapping relationship between a PIM tile and a designated memory address according to an embodiment.
FIG. 11 is a diagram illustrating an operating method of a host processor according to an embodiment.
FIG. 12 is a diagram illustrating a host program executed by an electronic device according to an embodiment.
FIG. 13 is a diagram illustrating a PIM program executed by a memory device according to an embodiment.
FIG. 14 is a diagram illustrating a row router that is separately provided from a host system and a memory device according to an embodiment.
FIG. 15 is a diagram illustrating an operating method of an electronic device according to an embodiment.
FIG. 16 is a diagram illustrating an electronic device according to an embodiment.

### DETAILED DESCRIPTION

While the following detailed description of certain embodiments is provided, various alterations and modifications may be made to these embodiments. The embodiments are not construed as limited to this detailed description, but include all changes, equivalents, and replacements within the idea and the technical scope of the disclosure.

As used herein, "A or B", "at least one of A and B", "at least one of A or B", "A, B or C", "at least one of A, B and C", "at least one of A, B, or C", and "one or a combination of at least two of A, B, and C," each of which may include any one of the items listed together in the corresponding one of the phrases, or all possible combinations thereof. Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, embodiments will be described in detail with reference to the accompanying drawings. When describing the embodiments with reference to the accompanying drawings, like reference numerals refer to like components, and any repeated description related thereto will be omitted.

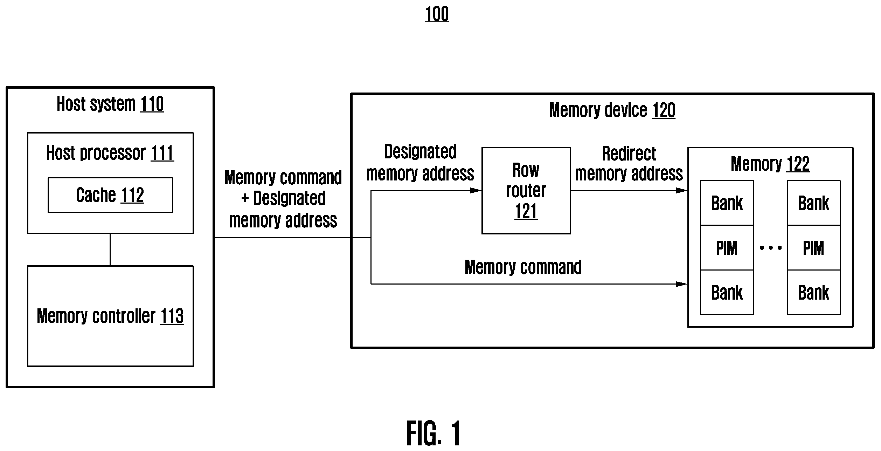

FIG. 1 is a diagram illustrating an electronic device according to an embodiment.

Referring to FIG. 1, an electronic device 100 according to an embodiment includes a host system 110 and a memory device 120. The host system 110 includes a host processor 111 and a memory controller 113 (e.g., a controller circuit). In an embodiment, the memory device 120 includes a row router 121 and a memory 122.

The host processor 111 may be a device configured to control the overall operation of the host system 110 and may include various processors, for example, a central processing unit (CPU), a graphics processing unit (GPU), a neural processing unit (NPU), a tensor processing unit (TPU), or a digital signal processor (DSP). The host processor 111 may generate a request for components (e.g., the memory controller 113) in the host system 100 and components (e.g., the memory 122) in the memory device 120 via a host program. For example, the host processor 111 may execute the host program, and the executing host program may generate the request.

The request for the memory 122 generated by the host processor 111 may be related to a general memory operation and a processing in memory (PIM) operation. The general memory operation may be a general operation (e.g., read, write, copy, and erase) of the memory 122, and may be referred to as a non-PIM operation. The PIM operation may include at least one of arithmetic operations, such as addition, multiplication, and accumulation, and logical operations, such as AND, OR, and XOR in the memory 122. With no need to read a large amount of operand data from the memory 122 through a PIM operation to the host processor 111 and/or an accelerator, only an operation result may be read to the host processor 111 and/or the accelerator after an operation is directly performed in the memory 122. For example, instead of the host system reading operand data from the memory device 120 and then performing an arithmetic operation on the read operand data, a processor within the memory device 120 may perform the arithmetic operation on operand data stored within the memory 122. Accordingly, power consumption may be minimized by reducing a data movement distance and minimizing the loss of a memory bandwidth.

The accelerator may be a device that operates according to the control of the host processor 111 and may process tasks that are more efficiently processed in a separate, dedicated processor (that is, the accelerator) rather than the general-purpose host processor 111 due to the nature of operations. Examples of these operations may include operations according to a neural network or operations that have many operands. For example, the accelerator may include a GPU, an NPU, a TPU, or a DSP.

The host processor 111 may include a cache 112. The cache 112 may be device that stores data so that the host processor 111 is able to rapidly access the data. For example, when the host system 110 includes a host memory that stores first data and the cache 112 stores second data, the physical characteristics of the cache 112 as compared to the physical characteristics of the host memory enable the host system 110 to access the second data more quickly than the first data. For example, the cache 112 may be accessed more quickly when it is closer to the host processor 111 than the host memory and/or when the cache 112 it has a lower latency than the host memory.

The host processor 111 may generate a memory address together with a memory request. The memory request generated by host processor 111 may be related to the memory address it is generated with. The host processor 111 may transmit the generated memory request and the memory address to the memory controller 113. In the present disclosure, the memory address generated by the host processor 111 may be referred to as a designated memory address.

The memory controller 113 may be a device for managing a data flow input to the memory 122 or output from the memory 122. The memory controller 113 may generate a memory command according to the memory request and the memory address received from the host processor 111 and may transmit the memory command to the memory device 120. In other words, the memory controller 113 may transmit the generated memory command and the designated memory address to the memory device 120. The memory command may be related to an operation to be executed at the memory address in the memory 122.

**In** the memory device 120, the designated memory address transmitted from the host system 110 may be converted into a redirected memory address through the row router 121, and the memory command may be transmitted to the memory 122. For example, the memory 122 may receive the redirected memory address from the row router 121 and the memory command from the memory controller 113. Alternatively, depending on the embodiment, the row router 121 may receive a designated memory address and a memory command, may convert the designated memory address into a redirected memory address, and may transmit the memory command to the memory 122 without modification. For example, the memory 122 may receive the redirected memory address and the memory command from the from the row router 121.

The row router 121 may be a device for routing a memory address and may convert a received memory address into a different memory address. The row router 121 may include a routing register storing mapping information that maps each designated memory address to a redirected memory address. The designated memory address may represent a partial area of the memory 122 and the redirected memory address may represent another partial area of the memory 122. In other words, the designated memory address and the redirected memory address may represent different areas of the memory 122. For example, the designated memory address may be associated with a first region of the memory 122 that is smaller than a total capacity of the memory and the redirected memory address may be associated with a second other region of the memory 122 that is also smaller than the total capacity. The row router 121 may be a logic circuit that includes the routing register.

According to an embodiment, the mapping information may be information that one-to-one maps designated memory addresses to redirected memory addresses, and for example, may be implemented as a routing table.

The row router 121 may include a selection logic that converts an input memory address into a redirected memory address mapped to a corresponding designated memory address, based on the mapping information stored in the routing register. The selection logic may include a circuit (e.g., an electrical circuit or a logical circuit) that selects one from input signals, and may be implemented by, for example, a multiplexer (MUX), or a selector. However, the selection logic is not limited thereto. The input memory address received by the row router 121 may be requested from the host processor 111, and may be a designated memory address included in a memory command generated by the memory controller 113. According to an embodiment, the row router 121 receives, as an input memory address, the designated memory address transmitted from the memory controller 113 and converts the input memory address into a redirected memory address. The memory command may be executed at the redirected memory address of the memory 122 converted by the row router 121. In other words, a PIM operation corresponding to the memory command may be performed on the data of the converted redirected memory address.

The memory 122 may be a device for performing a PIM operation through an internal processor other than storing data and may include, for example, dynamic RAM (DRAM), high bandwidth memory (HBM), graphics double data rate (GDDR), or low-power double data rate (LPDDR). However, embodiments are not limited thereto. The memory 122 may be hardware device capable of performing a PIM operation in addition to a general memory operation, and for example, may perform various operations since the memory 122 is programmable. The memory 122 may include a data storage space for storing data and an internal processor for performing the logical operation and/or the arithmetic operation described above. The PIM operation may use the data storage space and the internal processor. The general memory operation may use the data storage space but does not require use of the internal processor.

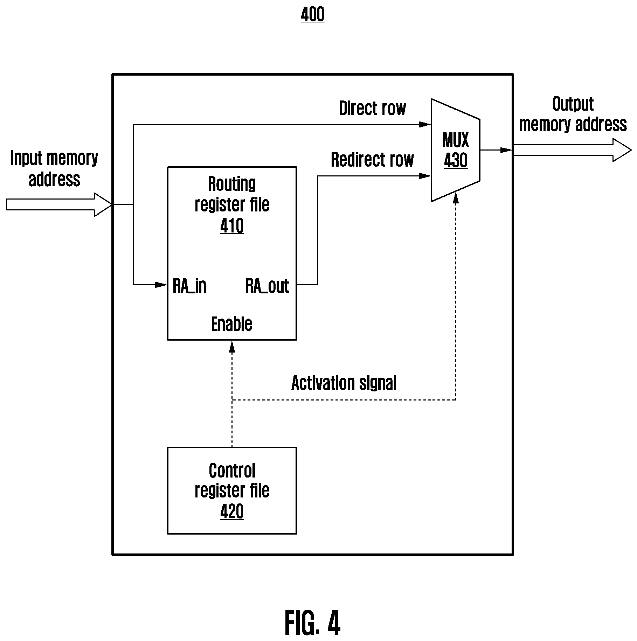

According to an embodiment, the memory 122 may store data by dividing an area into a channel, a bank, or a rank. The bank of the memory 122 may be managed by the memory controller 113. According to an embodiment, the PIM operation may be performed on the data of one or more banks of the memory 122. In FIG. 4, only four banks of the memory 122 are illustrated for ease of description. However, embodiments of the disclosure are not limited thereto and the memory 122 may include less than four banks or more than four banks.

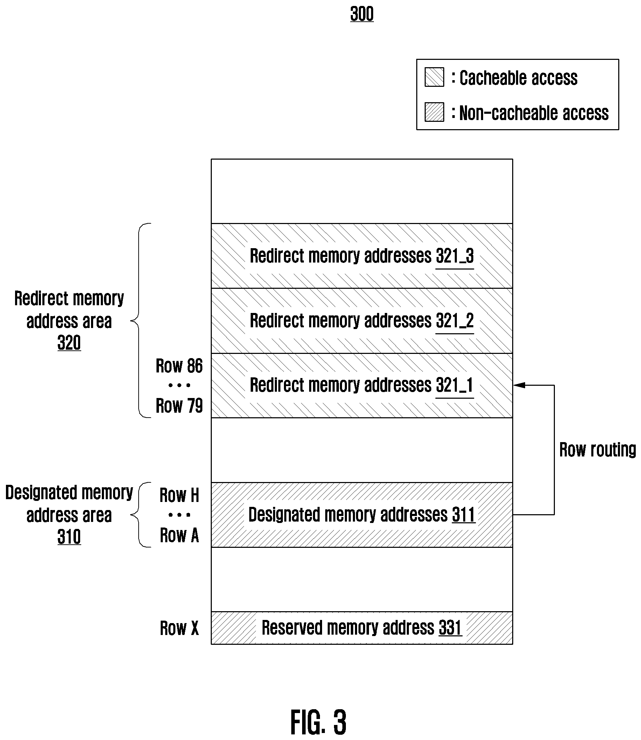

The memory 122 may execute, at the redirected memory address, the memory command received from the row router 121. The memory 122 may perform one or more PIM operations at the redirected memory address according to the memory command. Since the memory 122 may perform a general memory operation or a PIM operation in response to the command received from the memory controller 113, a portion or entirety of the memory 122 may not be designated as a general memory or a PIM, and cacheable or non-cacheable access to the entire or a portion of the memory 122 may be allowed. For example, while cacheable access to a portion of the memory 122 is performed, a non-cacheable access to another portion of the memory 122 may be performed. The cacheable or non-cacheable access is further described with reference to FIG. 3.

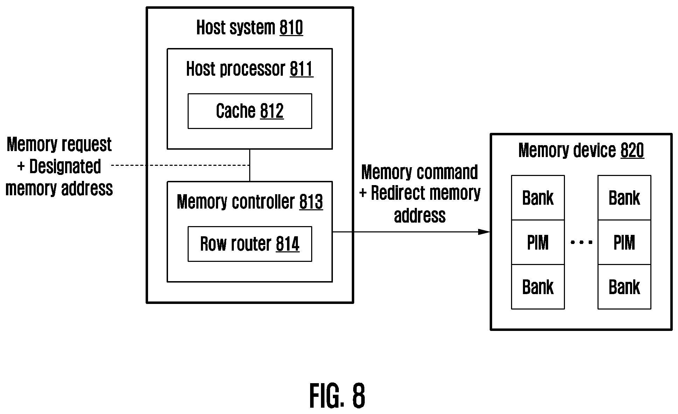

Although FIG. 1 illustrates an example in which the row router 121 is included in the memory device 120 for ease of description, embodiments of the inventive concept are not limited thereto. For example, the row router 121 may be provided separately from the host system 110 and the memory device 120, or may be included in the host system 110. Additionally, the electronic device 100 may include only a row router that is provided separately from the host system 110 and the memory device 120, may include a host system including a memory controller including a row router, or may include a memory device including a row router. The electronic device 100 may include various computing devices, such as a mobile phone, a smartphone, a tablet personal computer (PC), an e-book device, a laptop, a PC, a desktop, a workstation, or a server, various wearable devices, such as a smart watch, smart eyeglasses, a head-mounted display (HMD), or smart clothing, various home appliances such as a smart speaker, a smart television (TV), or a smart refrigerator, and other devices, such as a smart vehicle, a smart kiosk, an Internet of things (IoT) device, a walking assist device (WAD), a drone, or a robot. Various embodiments that are applicable to the row router and/or the electronic device are further described with reference to FIGS. 8 to 14.

In an embodiment, the host system 110 use an accelerator for a large language model (LLM). When the host system 110 relates to LLM acceleration, the host system 110 may perform cacheable access to an LLM parameter stored in the memory 122 in a summary operation for summarizing a sentence and a generation operation for generating a sentence. On the other hand, when the host system 110 desires to perform a PIM operation for LLM acceleration, the host system 110 may perform a non-cacheable access to an LLM parameter in the generation operation. In various embodiments, the electronic device 100 may efficiently control the use of cache 112 of the host processor 111 by converting a memory address using the row router 121. For example, by using the row router 121, the electronic device 100 may enable cacheable access to a memory area in which an LLM parameter is stored for the host system 110 to perform a PIM operation. In addition, in various embodiments, the row router 121 may be controlled by simple implementation in the host system 110, and thereby, the burden of design modification of the host system 110 or the memory device 120 may be reduced. In addition, in various embodiments, software overhead associated with address calculation occurring due to a PIM operation may be reduced.

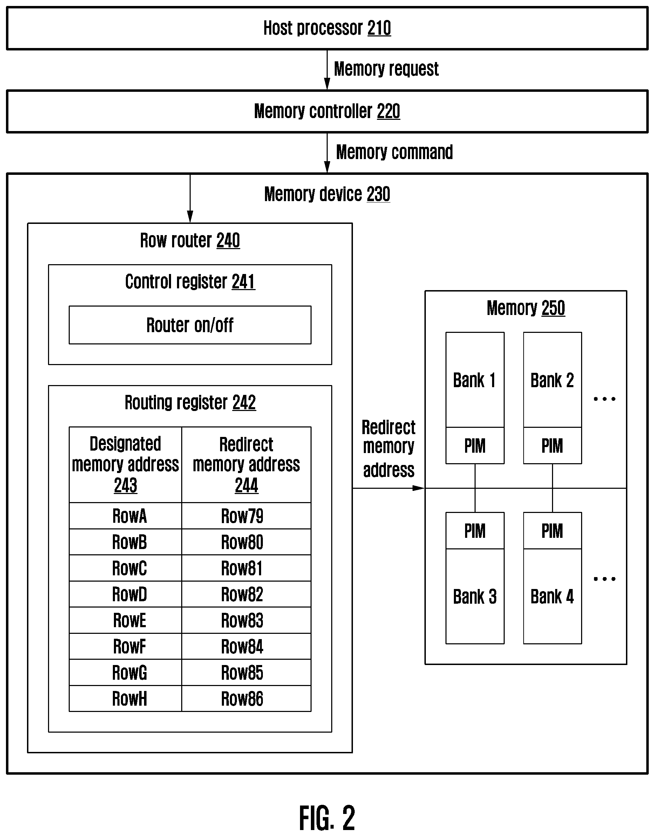

FIG. 2 is a diagram illustrating a row router according to an embodiment.

Referring to FIG. 2, a host processor 210, a memory controller 220, and a memory device 230 are illustrated as an example. In addition, a row router 240 and a memory 250 included in the memory device 230 are illustrated as an example. The memory device 230 may be used to implement memory device 120.

The row router 240 may include a routing register 242. The routing register 242 may store mapping information. The mapping information may map predetermined designated memory addresses to redirected memory addresses 244, respectively. According to an embodiment, in the mapping information, the designated memory address 243 and the redirected memory address 244 may be one-to-one mapped. For example, as shown in FIG. 2, Row A to Row H determined to be the designated memory address 243 in the mapping information may be one-to-one mapped to Row 79 to Row 86 determined to be the redirected memory address 244. Although eight designated memory addresses and eight redirected memory addresses stored in the routing register 242 are illustrated in FIG. 2 for ease of description, embodiments of the inventive concept are not limited thereto, and a plurality of designated memory addresses and a plurality of redirected memory addresses may be stored.

According to an embodiment, the number of designated memory addresses and redirected memory addresses stored in the routing register 242 is determined based on the number of memory addresses corresponding to one PIM tile in which a PIM operation is performed.

According to an embodiment, a maximum input size of the routing register 242 may be determined based on the number of designated memory addresses stored in the mapping information. For example, as shown in FIG. 2, when the number of designated memory addresses stored in the mapping information is 8, the maximum input size of the memory addresses input to the routing register 242 may be 8.

According to an embodiment, the row router 240 may further include a control register 241. The control register 241 may generate an activation signal for the routing register 242. The activation signal may be related to whether to perform row routing on the memory address that the row router 240 receives. The activation signal may indicate whether to perform row routing through a specific field value in the signal. The host processor 210 may transmit, to the row router 240, information indicating whether to perform row routing. The control register 241 may store information indicating whether to perform row routing received from the host processor 210 as the activation signal. For example, when the host processor 210 attempts to perform row routing by the row router 240, the host processor 210 may transmit "1" to store "1" in the control register 241, and when the host processor 210 does not attempt to perform row routing, the host processor 210 may transmit "0" to store "0" in the control register 241.

The control register 241 may transmit the activation signal to at least one of the routing register 242 and a selection logic. The row router 240 may perform row routing on an input memory address to generate a redirected memory address and may transmit the redirected memory address to the memory 250. For ease of description, in the present disclosure, an activation signal to perform row routing may be referred to as "router on" or "enable signal", and an activation signal not to perform row routing may be referred to as "router off" or "disable signal".

According to an embodiment, when the following conditions are satisfied, the row router 240 performs row routing on the input memory address.
1. The activation signal from the control register 241 is in the "router on" state.
2. The input memory address received by the row router 240 corresponds to the designated memory address 243 stored in the routing register 242.
3. A redirected memory address mapped to the designated memory address 243 exists.

In an embodiment, when the row router 240 is included in the memory device 230, the memory device 230 may be effectively controlled without a change in the host system including the host processor 210 and the memory controller 220. In addition, the control register 241 and the routing register 242 of the row router 240 and a PIM register of the memory 250 may be mapped to a predetermined row address (e.g., Row0) in the memory device 230, and may be disposed to set a value of a register in the host system 110.

In the memory 250, a PIM block may perform a PIM operation on the data stored in a bank. A PIM block corresponding to each bank may include a processor or an arithmetic unit performing a PIM operation with the data stored in the bank as an operand. In addition, the PIM block may include a PIM register storing data to control the PIM operation. For example, a PIM block corresponding to a bank 1 may perform a PIM operation according to a memory command received from the memory controller 220 using the data stored in the bank 1.

The designated memory addresses and the redirected memory addresses of the memory 250 are further described with reference to FIG. 3.

FIG. 3 is a diagram illustrating a memory area according to an embodiment.

Referring to FIG. 3, a designated memory address area 310 representing a partial area of a memory 300 and a direct memory address area 320 representing another partial area of the memory 300 are illustrated as an example.

The designated memory address area 310 may be an area accessible through designated memory addresses 311, and the redirected memory address area 320 may be an area accessible through a plurality of redirected memory addresses 321_1, 321_2, and 321_3. For ease of description, in FIG. 3, three sets of the redirected memory addresses 321_1, 321_2, and 321_3 of the redirected memory address area 320 having eight row addresses are illustrated. However, embodiments of the inventive concept are not limited thereto. For example, the memory address area 320 may include less than three sets or more than three sets having a plurality of row addresses. In addition, in an embodiment, a reserved memory address 331, the designated memory addresses 311, and the redirected memory addresses 321_1, 321_2, and 321_3 may be expressed as row addresses.

In an embodiment, the memory 300 may be implemented as a memory cell divided into a row and a column. A row address and a column address may respectively represent a corresponding row and a corresponding column of the memory 300. Through the row address and/or the column address, the host processor (e.g., 111 or 210) may access the data stored in a memory area indicated by the corresponding address. In the present disclosure, for ease of description, the memory addresses are expressed as row addresses. However, embodiments of the inventive concept are not limited thereto, and the memory addresses may be expressed as various types of addresses (e.g., a column address).

The reserved memory address 331 may represent a memory address reserved by the host processor (e.g., 111 or 210) or the memory device (e.g., 120 or 230). The reserved memory address 331 may represent a register to control a PIM operation. In the reserved memory address 331, data used to control registers in a PIM block, a routing register, and a control register may be stored. The data stored at the reserved memory address may be used for one or more of an instruction register file (IRF), a vector register file (VRF), a scalar register file (SRF), and a rename register file (RRF).

A memory request for the memory 300 may have a cacheable or non-cacheable feature depending on a request of the host program. The cacheable feature may be a cache-accessible memory request and may indicate that an operation of finding data requested by the host program in the memory 300 with relatively high access overhead is performable when the data is not in a cache after identifying that the data is in the cache with relatively low access overhead. When the data is in the cache, the data may be read quickly in the cache without reading the data in the memory 300, which may help increase performance. On the other hand, the non-cacheable feature may be a non-cache accessible memory request, and may indicate that the data requested by the host program is read from the memory 300 without checking the cache. Since a PIM operation may be normally performed only when a PIM command is transmitted to the memory 300, a request for the PIM operation may have the non-cacheable feature. Conversely, a request for a general memory operation may have one of the cacheable feature and the non-cacheable feature without limitation according to the request of the host program.

According to an embodiment, the designated memory addresses 311 may be memory addresses designated to indicate that a PIM operation is requested by the host processor, and the redirected memory addresses 321_1, 321_2, and 321_3 may represent memory addresses in which weight parameters (e.g., an LLM parameter) for the PIM operation are stored. According to an embodiment, the host processor may allocate the designated memory address area 310 allowing non-cacheable access thereto and may allocate the redirected memory address area 320 allowing cacheable access thereto. A non-cacheable access to the designated memory address area 310 may be allowed and cacheable access to the redirected memory address area 320 may be allowed. The PIM operation may be performed on the data stored in the cache-accessible memory.

In an embodiment, the designated memory addresses 311 may be one-to-one mapped to the redirected memory addresses 321_1 according to the mapping information. In the example of FIG. 3, Row A to Row H determined to be the designated memory addresses 311 may be mapped to Row 79 to Row 86 determined to be the redirected memory addresses 321_1, respectively. For example, the designated memory address Row A may be one-to-one mapped to the redirected memory address Row 79, and the designated memory address Row B may be one-to-one mapped to the redirected memory address Row 80. Similarly, the remaining memory addresses Row C to Row H may be one-to-one mapped to the redirected memory addresses Row 81 to Row 86.

However, although FIG. 3 illustrates that the designated memory addresses 311 and the redirected memory addresses 321_1, 321_2, and 321_3 are consecutive row addresses for ease of description, embodiments of the inventive concept are not limited thereto. For example, the designated memory addresses 311 and the redirected memory addresses 321_1, 321_2, and 321_3 may be determined to be non-consecutive memory addresses.

When an input memory address corresponds to one of the designated memory addresses 311, the row router (e.g., 121 or 240) may convert the input memory address into a redirected memory address mapped to the corresponding designated memory address, based on the mapping information. In other words, the row router may determine whether an input memory address corresponds to one of the designated memory addresses, and when the input memory address corresponds to one of the designated memory addresses, the row router may perform row routing. In an embodiment, when the input memory address does not correspond to one of the designated memory addresses, the row router outputs the input memory address without modification.

According to an embodiment, as row routing is performed on the designated memory address area 310 by the row router, the host system may non-cacheable access the redirected memory address area 320 allowing cacheable access.

According to an embodiment, when PIM operations are performed on a target PIM tile of a target PIM file corresponding to a converted redirected memory address, the redirected memory addresses 321_1 may be updated to a plurality of redirected memory addresses corresponding to the next PIM tile of the target PIM file. For example, when PIM operations are performed on a PIM tile corresponding to the redirected memory addresses 321_1, redirected memory addresses mapped to the designated memory addresses 311 may be updated to the redirected memory addresses 321_2 or the redirected memory addresses 321_3, according to the plurality of redirected memory addresses corresponding to the next PIM tile.

FIG. 4 is a diagram illustrating a configuration and an operation of a row router according to an embodiment.

Referring to FIG. 4, a row router 400 including a routing register file 410, a control register file 420, and an MUX 430 is illustrated as an example. The row router 400 may be used to implement the row router 121.

According to an embodiment, the routing register file 410 may include a routing register, and the control register file 420 may include a control register. Herein, the routing register file 410 may be referred to as a routing-table register file (RRF) for ease of description.

The routing register file 410 may receive a memory address through an input port RA_in and may output a converted memory address through an output port RA_out. According to an embodiment, the routing register file 410 may convert an input memory address into a redirected memory address mapped to a corresponding designated memory address and may output the redirected memory address, based on the mapping information through a selection logic.

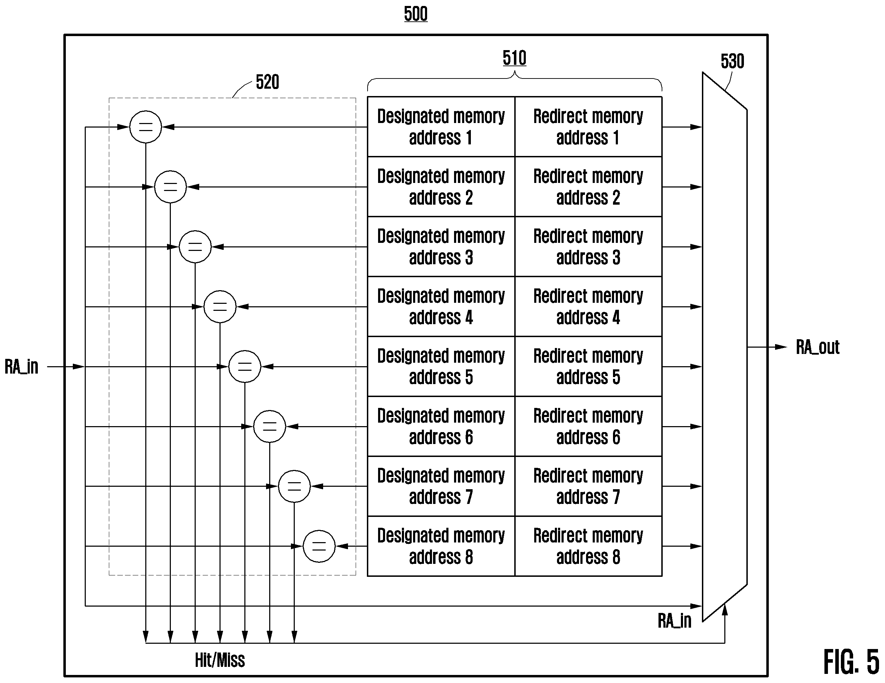

The mapping information between the designated memory addresses and the redirected memory addresses that are stored in the routing register file 410 may be cached. The routing register file 410 may search for the designated memory addresses according to the selection logic and may convert the input memory address into the redirected memory address mapped to the corresponding designated memory address. In other words, when the input memory address is found in the designated memory addresses, the routing register file 410 may output the corresponding converted redirected memory address, and when the input memory address is not found, the routing register file 410 may output the input memory address. The routing register file 410 may be enabled or disabled according to an activation signal from the control register file 420. A detailed configuration of the routing register file 410 is further described with reference to FIGS. 5 to 9.

The control register file 420 may transmit, to the selection logic, the activation signal for a routing register. The routing register file 410 may receive the activation signal at an Enable port. According to an embodiment, the control register file 420 transmits the activation signal to the routing register file 410 and the MUX 430. Depending on the activation signal, the selection logic may select one from the input memory address and the mapped redirected memory address.

According to an embodiment, the selection logic may include the MUX 430. The MUX 430 may receive the input memory address as a direct row and the converted redirected memory address as a redirected row, and may output one of the direct row and the redirected row according to the activation signal. The selection logic may include the MUX 430, but embodiments of the inventive concept are not limited thereto and may be implemented as various structures including, for example, a selector.

For example, when the activation signal is an "enable signal", the routing register file 410 is enabled, the mapping information may be searched, and the selection logic may select and output the redirected row through the MUX 430. On the other hand, when the activation signal is a "disable signal", the routing register file 410 is disabled, the mapping information is not searched, and the selection logic may select and output the direct row through the MUX 430.

FIG. 5 is a diagram illustrating a routing register file according to an embodiment.

Referring to FIG. 5, a routing register storing mapping information 510 and a routing register file 500 including a portion of a selection logic are exemplarily illustrated. The routing register file 500 may be used to implement the routing register file 410.

The routing register file may store the mapping information 510 that maps a plurality of designated memory addresses to redirected memory addresses. The number of designated memory addresses and redirected memory addresses stored in the mapping information 510 may vary depending on the embodiment. **In** addition, the size of the routing register file may be determined based on the number of designated memory addresses and the number of redirected memory addresses stored in the mapping information 510. For example, when a designated memory address or a redirected memory address has a size of 16 bits, the number of designated memory addresses is 8, and the number of redirected memory addresses is 8, the size of the routing register file may be determined to be 256 bits.

**In** an embodiment, the selection logic may include comparators 520 and an MUX 530.

Each of the comparators 520 may determine whether an input memory address input to the routing register file 500 coincides with one of the designated memory addresses. For example, the comparators 520 may determine whether an input memory address matches a given address among the designated memory addresses. The comparators 520 may transmit a determination result to the MUX 530. For example, each of the comparators 520 may determine whether an input memory address coincides with a designated memory address 1 to a designated memory address 8, and when the input memory address coincides, each of the comparators 520 may transmit "hit" (or a first value indicating a hit) to the MUX 530 as a determination result, and when the input memory address does not coincide, each of the comparators 520 may transmit "miss" (or a second other value indicating a miss) to the MUX 530 as a determination result. The comparators 520 may be implemented as specific hardware, but embodiments of the inventive concept are not limited thereto. For example, the comparators 520 may be implemented as various logics or hardware capable of determining whether an input memory address coincides with one of designated memory addresses.

When the input memory address coincides with one of the designated memory addresses, the MUX 530 may convert the input memory address into a redirected memory address mapped to a coincided designated memory address and may output the redirected memory address. Additionally, when the input memory address does not coincide with one of the designated memory addresses, the MUX 530 may output the input memory address. In other words, the MUX 530 may receive a determination result of each of the designated memory addresses and may output a redirected memory address mapped to a coincided designated memory address. For example, when an input memory address coincides with the designated memory address 1, the selection logic may select and output a redirected memory address 1.

However, the structure of the selection logic shown in FIG. 5 is an example for description, and embodiments of the inventive concept are not limited thereto. The selection logic may have various structures for determining whether an input memory address coincides with designated memory addresses and outputting a redirected memory address mapped to a designated memory address.

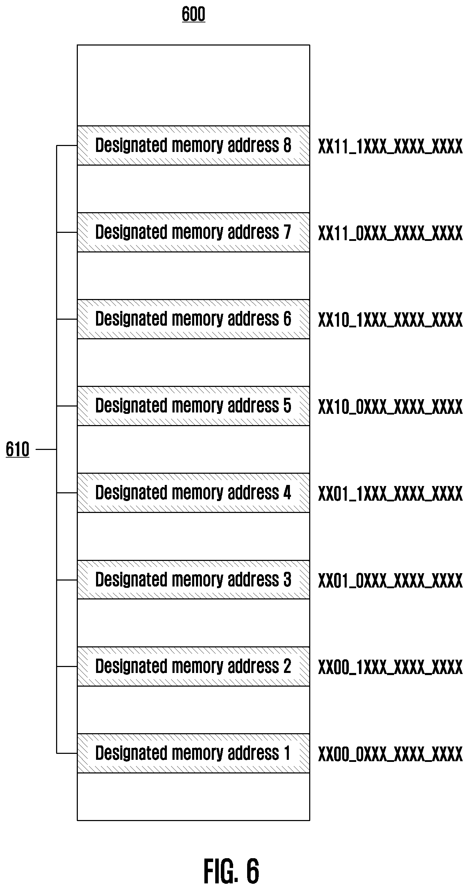

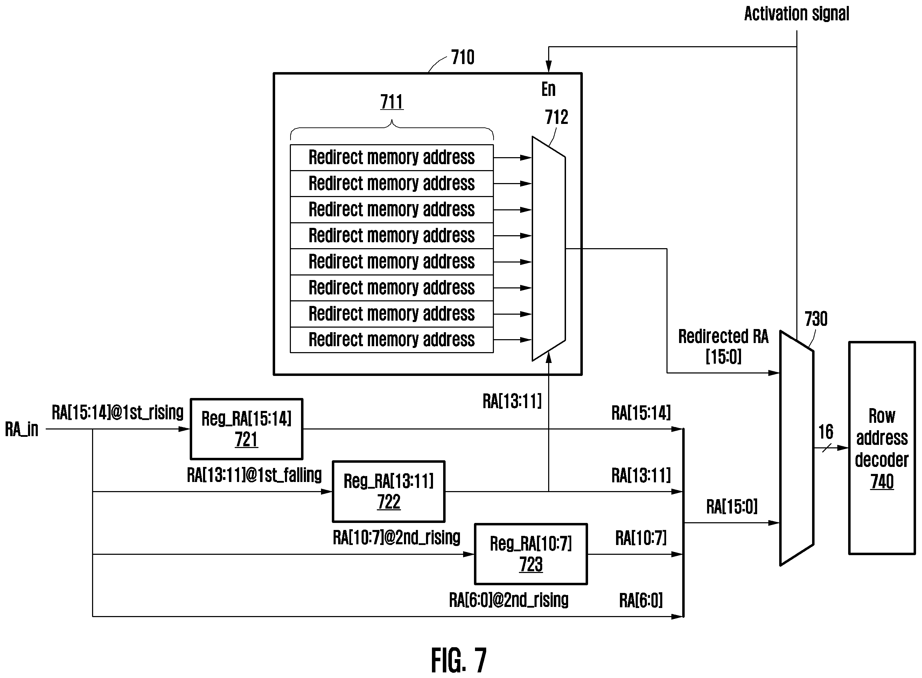

FIGS. 6 and 7 are diagrams illustrating a row router using some bits representing a memory address according to an embodiment.

Referring to FIG. 6, designated memory addresses 610 determined based on some bits representing a memory address in a memory 600 is illustrated as an example.

According to an embodiment, the designated memory addresses 610 are determined based on some bits at a predetermined position among bits representing a memory address. For example, the designated memory addresses 610 may be determined based on bits of 11th to 13th indices in a memory address expressed as 16 bits in FIG. 6. For example, when the designated memory addresses 610 include 8 addresses, 3 bits of the memory address may be used to determine the designated memory addresses 610.

Referring to FIG. 7, an example of a row router that outputs a mapped redirected memory address based on some bits representing an input memory address is illustrated.

A routing register file 710 may store mapping information 711 that maps redirected memory addresses based on some bits representing an input memory address.

In FIG. 7, a selection logic may include an MUX 712, blocks 721 (e.g., first sub-logic), 722 (e.g., second sub-logic), and 723 (e.g., third sub-logic), and an MUX 730. The selection logic may distinguish bits representing each input memory address through the blocks 721, 722, and 723. In addition, the selection logic may distinguish and receive bits of an input memory address based on a clock signal from a host processor. For example, the block 721 may receive bits of 14th to 15th indices of an input memory address in response to a rising edge of a first clock signal, the block 722 may receive bits of 11th to 13th indices of the input memory address in response to a falling edge of the first clock signal, and the block 723 may receive bits of 7th to 10th indices of the input memory address in response to a rising edge of a second clock signal.

According to an embodiment, a block that receives some bits at a predetermined position among the bits representing the input memory address may transmit the corresponding bits to an MUX. For example, as shown in FIG. 7, when a predetermined position, which determines a designated memory address, is 11th to 13th indices of an input memory address, the block 722 that receives bits of the corresponding index may transmit the received bits to the MUX 712.

According to an embodiment, the MUX 712 determines whether the input memory address corresponds to one of the designated memory address, based on some bits representing the input memory address. When the input memory address corresponds to one of the designated memory address, the MUX 712 may output a redirected memory address mapped to the designated memory address based on the mapping information 711.

The MUX 730 may receive the input memory address and a converted redirected memory address, and may output one of the input memory address and the redirected memory address as a direct row based on an activation signal. A row address decoder 740 may select a row address of the memory according to the memory address received from the MUX 730.

FIG. 8 is a diagram illustrating a row router included in a memory controller according to an embodiment.

Referring to FIG. 8, a row router 814 may be included in a memory controller 813. In a host system 810, a host processor 811 may transmit a memory request and a designated memory address to the row router 814 in the memory controller 813. The memory controller 813 may generate a memory command in response to the memory request. Additionally, the row router 814 may transmit a redirected memory address and the memory command to a memory device 820 by performing row routing on a received designated memory address.

The host system 810, the host processor 811, a cache 812, the memory controller 813, the row router 814, and the memory device 820 are described above with respect to FIG. 1, and thus, a repeated description is omitted. For example, the host system 810 may be similar to host system 110, the host processor 811 may be similar to host processor 111, the cache 812 may be similar to cache 112, the memory controller 813 may be similar to memory controller 113, the row router 814 may be similar to row router 121, and the memory device 820 may be similar to memory device 120.

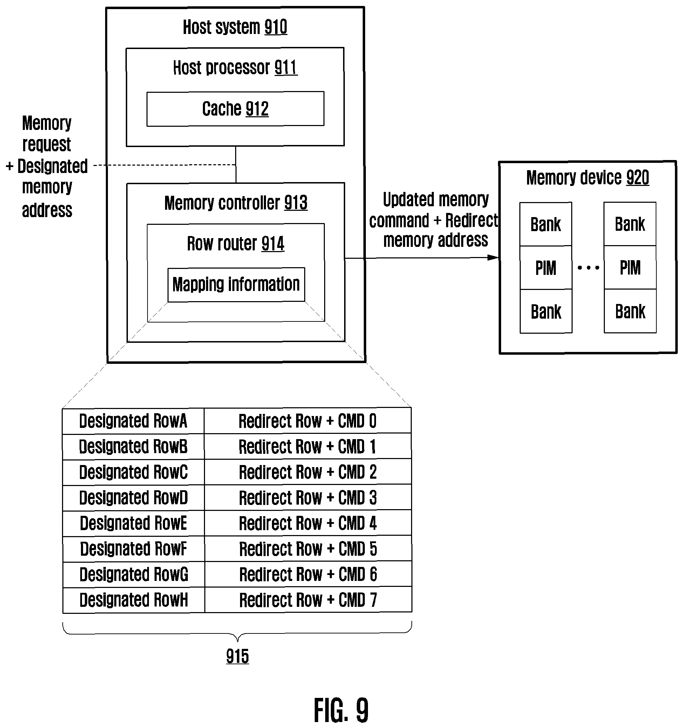

FIG. 9 is a diagram illustrating a row router that updates a memory command to a PIM command according to an embodiment.

Referring to FIG. 9, mapping information 915 that further maps each of designated memory addresses to a memory command when a row router 914 is included in a memory controller 913 is illustrated as an example.

According to an embodiment, the mapping information 915 maps each of predetermined designated memory addresses to a redirected memory address and a memory command to be executed at the redirected memory address. The memory command may include a command for a general memory operations or a PIM command to perform a PIM operation depending on the embodiment. In an embodiment, the row router 914 may distinguish a general memory request from a new PIM request by mapping the designated memory addresses to a PIM command through the mapping information 915.

When the row router 914 receives the memory request from the host processor 911, the row router 914 may change an input memory address to a redirected memory address that is mapped to the designated memory address based on the mapping information 915, and may update the memory command to a PIM command that is mapped to the corresponding designated memory address. In an embodiment, the row router 914 may update a PIM CMD value included in a command field of the memory command, according to a mapped PIM command. In an embodiment, the row router 914 receives a memory command and an input memory address from the host processor 911, the row router 914 selects an entry in the mapping information 915 associated with the input memory address, changes the input memory address to a redirected memory address of the entry and updates a command field of the memory command based on a command of the entry to generate the updated memory command.

The memory command that is stored in the mapping information 915 and is mapped to each designated memory address may be differently determined for each designated memory address. For example, Designated Row A may be mapped to CMD 0, and Designated Row B may be mapped to CMD 1. In the case of the PIM command, the memory command may include, for example, a PIMX command, a WRPB command, an RDP command, or a WRP command. However, embodiments of the inventive concept are not limited thereto. For example, the memory command may include various PIM commands having various types or values.

A memory device 920 may receive a redirected memory address and an updated memory command from the memory controller 913. The memory device 920 may execute the updated memory command at the received redirected memory address.

As the mapping information 915 further maps the designated memory addresses to the PIM command, PIM command extension for a new PIM request may be possible without complex hardware modification or system software changes, such as adding a new instruction set architecture (ISA) in the host system.

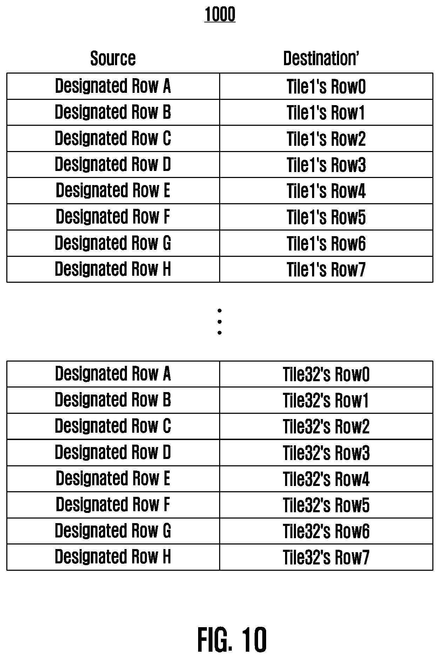

FIG. 10 is a diagram illustrating a mapping relationship between a PIM tile and a designated memory address according to an embodiment.

Referring to FIG. 10, a row router mapping table (RMT) 1000 that maps a PIM tile to designated memory addresses is illustrated as an example.

In the RMT 1000, each PIM tile may be mapped to a plurality of designated memory addresses according to designated memory addresses of the mapping information. For example, as shown in FIG. 10, a row of each PIM tile may be mapped to designated memory addresses of Row A to Row H. In an embodiment, the row of each PIM tile represents a redirected memory address.

Redirected memory addresses corresponding to a PIM tile may be stored in the mapping information stored in a routing register. According to an embodiment, redirected memory addresses corresponding to one PIM tile are stored in the mapping information stored in the routing register. When all PIM operations are performed on a PIM tile, an electronic device may update the memory addresses stored in the mapping information to memory addresses for a next PIM tile. In other words, when a loop for a PIM operation of one PIM tile has completed, the electronic device may update the redirected memory addresses stored in the mapping information to the redirected memory addresses for the next PIM tile.

The host processor may obtain redirected memory addresses to be stored in the mapping information through a system call. The redirected memory addresses to be stored in the mapping information may be memory addresses in which a weight parameter representing the data for an actual PIM operation is stored.

For example, when a first PIM tile of a weight matrix, which is an operation target, is stored in eight row addresses 0x001 to 0x008, and a second PIM tile is stored in eight row addresses 0x101 to 0x108, the following operations may be performed before or after a procedure to perform PIM to update the mapping information to the memory addresses for the next PIM tile.
- Before a procedure to perform a host program
   (1) The host processor may obtain row address information corresponding to a PIM tile in the form of [Tile1: 0x001 ~ 0x008], [Tile2: 0x101 ~ 0x108], and the like, through a system call.
   (2) The host processor may generate mapping information that maps eight designated memory addresses to eight redirected memory addresses and may store the mapping information in a predetermined address (e.g., row_router_table_ptr).
- After the procedure to perform the host program
   (1) The host processor may transmit the stored mapping information to a memory device through a memory command (e.g., a write command). The mapping information may be stored in the routing register in the row router instead of a general memory space in the memory device.
   (2) When a PIM operation is performed thereafter, a memory request or a memory command may be transmitted to the designated memory address, but the PIM operation may be performed by a corresponding redirected memory address according to the mapping information by the row router.
   (3) When all operations for the PIM tile have completed, the host processor may overwrite the redirected memory addresses stored in the routing register with the redirected memory addresses 0x101 to 0x108 corresponding to the second PIM tile, and may perform the PIM operation.

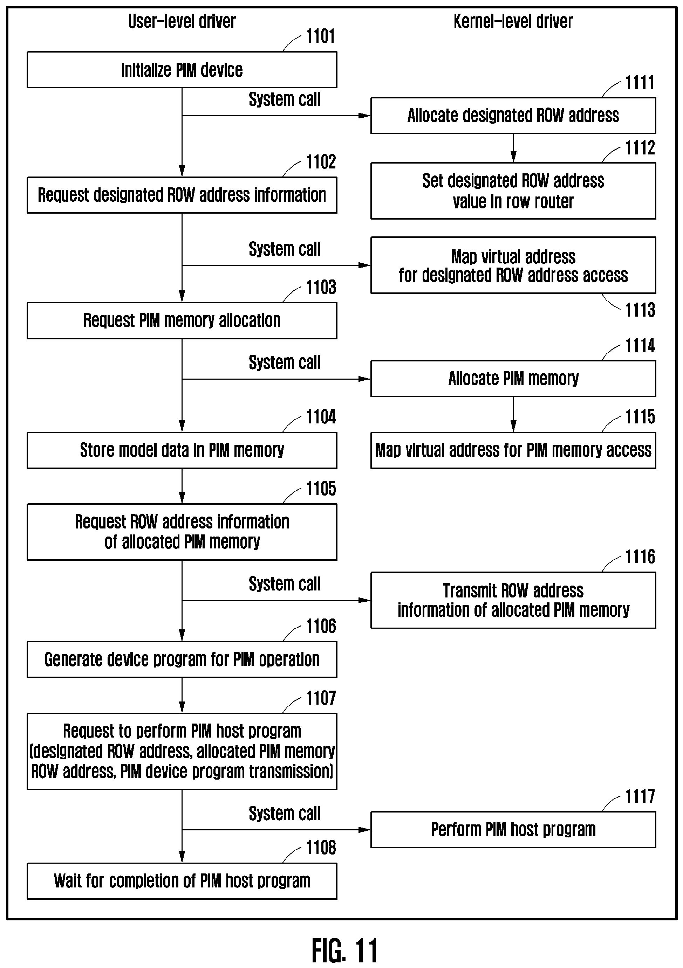

FIG. 11 is a diagram illustrating an operating method of a host processor according to an embodiment.

Operations to be described hereinafter may be sequentially performed but not necessarily. For example, the order of the operations may change, and at least two of the operations may be performed in parallel. Operations 1101 to 1108 and 1111 to 1117 may be performed by at least one component (e.g., a host processor) of an electronic device. For example, operations 1101 to 1108 may be performed by a user-level driver of the host processor, and operations 1111 to 1117 may be performed by a kernel-level driver of the host processor.

In operation 1101, a user-level driver initializes devices related to an electronic device. According to an embodiment, the user-level driver initializes hardware and software related to the PIM. The user-level driver may request a kernel-level driver to set a designated memory address value in the row router.

In operation 1111, the kernel-level driver allocates, to the system, designated memory addresses (e.g., designated ROW addresses) used to perform a PIM operation in response to the request of the user-level driver.

In operation 1112, the kernel-level driver stores the allocated designated memory addresses in the routing register in the row router. For example, the kernel-level driver may set a designated ROW address in the row router.

In operation 1102, the user-level driver requests the kernel-level driver for a virtual memory address that is able to access the designated memory addresses. For example, the user-level driver may request the kernel-level driver for address information of the designated ROW address.

In operation 1113, the kernel-level driver maps the designated memory addresses to the virtual memory address to access the designated memory addresses and may transmit the virtual memory address to the user-level driver.

In operation 1103, the user-level driver requests the kernel-level driver to allocate a memory area that is able to perform a PIM operation. For example, the user-level driver may request a PIM memory allocation.

In operation 1114, the kernel-level driver allocates a PIM memory area that is able to perform the PIM operation. According to an embodiment, the kernel-level driver allocates the PIM memory area that is managed page-wise by an operating system (OS).

In operation 1115, the kernel-level driver maps the virtual memory address to store data (e.g., model data such as weight parameters) in the PIM memory area and may transmit the virtual memory address to the user-level driver.

In operation 1104, the user-level driver stores the model data (e.g., weight parameters of a model) in the allocated PIM memory area.

In operation 1105, the user-level driver requests the kernel-level driver for the memory address in which the model data (e.g., the weight parameters) are stored to update a redirected memory address of the row router. For example, the user-level driver may request address information of the allocated PIM memory area.

In operation 1116, the kernel-level driver transmits, to the user-level driver, the memory addresses in the PIM memory area in which the model data (e.g., the weight parameters) is stored. According to an embodiment, the kernel-level driver sequentially transmits, to the user-level driver, the memory addresses in the PIM memory area.

In operation 1106, the user-level driver generates an instruction to perform the PIM operation. In other words, the user-level driver may generate a program to perform the PIM operation by the memory device.

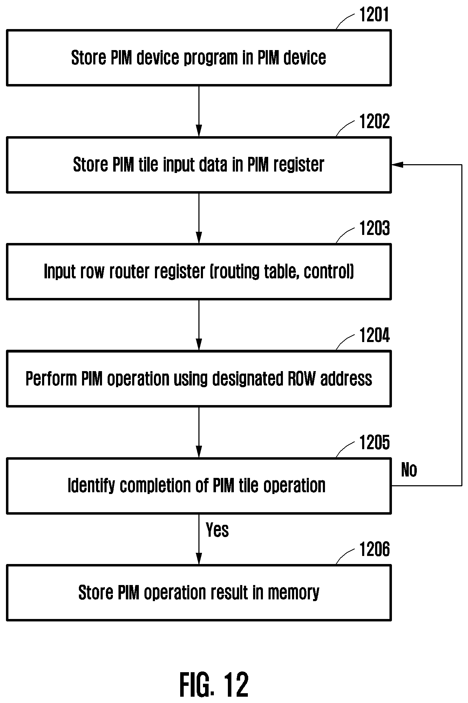

In operation 1107, the user-level driver requests the kernel-level driver to perform a host program. In other words, the user-level driver may request the kernel-level driver to perform the host program including read, write, or PIM requests. The host program may be a program executed by the host processor to perform a PIM operation through the memory device. A detailed operation of the host program is described with reference to FIG. 12.

In operation 1117, the kernel-level driver performs the host program requested by the user-level driver.

In operation 1108, the user-level driver may wait until the host program has completed.

FIG. 12 is a diagram illustrating a host program executed by an electronic device according to an embodiment.

Operations to be described hereinafter may be sequentially performed but not necessarily. For example, the order of the operations may change, and at least two of the operations may be performed in parallel. Operations 1201 to 1206 may be performed by at least one component (e.g., the host processor, the row router, or the memory device) of the electronic device.

In operation 1201, the host processor stores, in the memory device, a PIM program executed to perform a PIM operation by the memory device. The PIM program may include instructions for an operation, data movement, and control for a PIM operation. Herein, for ease of description, the instructions performed for the PIM operation may be referred to as a PIM ISA. The host processor may store the PIM program in an instruction register in the memory device. According to an embodiment, the instructions defined in the instruction register may be executed in a defined order or according to a specific field of the memory request.

In operation 1202, a PIM register of the memory device stores input data of a PIM tile. The input data of the PIM tile may be referred to as PIM tile input data. The PIM register may perform an operation by dividing the data into a PIM tile based on a degree of using the size of a register as much as possible when performing the PIM operation. According to an embodiment, the PIM register may receive data of a bank or the host system to perform an operation on the data stored in the bank of the memory.

In operation 1203, the row router may receive, from the host processor, data used for the routing register and the control register. For example, the data used for the routing register and the control register may be input to the row router. In addition, when the row router needs to be updated, the host processor may update the mapping information of the routing register and an activation signal. In an embodiment, the routing register of the row router may be used as one or more PIM tile units.

In operation 1204, the row router may perform row routing based on the mapping information stored in the routing register. Thereafter, the memory device may perform a PIM operation using the data stored in a bank of the corresponding memory as an operand by using the converted redirected memory address.

In operation 1205, the host processor determines whether an operation on the PIM tile in the memory device has completed. The operation on the PIM tile may be referred to as a PIM tile operation. When the operation has not completed, operations 1202 to 1205 may be iteratively performed on a next PIM tile on which the operation is performed after the corresponding PIM tile.

In operation 1206, the host processor may request to store a PIM operation result in the memory. For example, the PIM operation result may be stored in memory after the operation has completed.

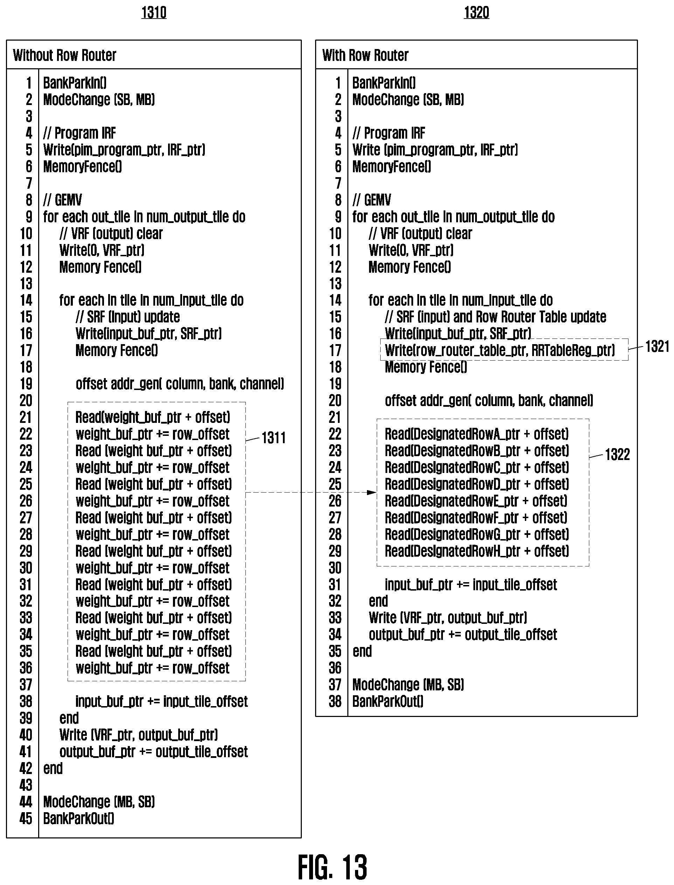

FIG. 13 is a diagram illustrating a PIM program executed by a memory device according to an embodiment.

Referring to FIG. 13, compared to a PIM program 1310 that performs a PIM operation without a row router, a PIM program 1320 that performs a PIM operation using a row router according to one of the above-described embodiments is illustrated as an example.

In FIG. 13, the PIM program 1310 and the PIM program 1320 are exemplary codes to aid in describing the inventive concept. However, embodiments of the inventive concept are not limited thereto, and the PIM programs 1310 and 1320 may be implemented with a variety of code.

Code 1311 of the PIM program 1310 may be changed to code 1321 and code 1322 of the PIM program 1320 by using the row router. In the PIM program 1320, each code may cause the memory device to perform the following operations shown in Table 1 below.

**[Table 1]**

| Line | Code | Description |
|---|---|---|
| 1 | BankParkIn() | An operation of setting a bank in the memory in a same standby state may be performed. |
| 2 | ModeChange(SB, MB) | An operation of changing from a single bank mode to a multi-bank mode may be performed. |
| 5 | Write( pim_program_ptr, IRF_ptr ) | A PIM command stored in pim_program_ptr may be stored as an IRF. The IRF may be used as an input register. |
| 11 | Write( 0, VRF_ptr ) | VRF may be initialized by storing 0. |
| 16 | Write( input_buf_ptr, SRF_ptr) | An input stored in input_buf_ptr may be stored in an SRF. The SRF may be used as an output register. |
| 17 | Write( row_router_table_ ptr, RRT_ptr) | The mapping information stored in row_router_table_ptr may be stored in the row router. In an embodiment, a routing table stored in row_router_table_ptr may be stored in the row router. |
| 20 | offset = addr_gen(col, bank, channel) | A lower physical address except for a row may be calculated by receiving addresses of a column, a bank, and a channel. |
| 22~29 | Read ( DesignatedRow_ptr + offset ) | A PIM operation may be performed on an address obtained by adding the designated memory address to the previously generated lower address (offset). A memory address that is actually accessed may be a redirected memory address converted by the row router rather than the designated memory address. |
| 31 | Input_buf_ptr += input_tile_offset | input_buf_ptr may be updated to an address in which the input data corresponding to the next PIM tile of the executed PIM tile is stored. |
| 33 | Wirte( VRF_ptr, output_buf_ptr ) | A VRF in which an operation result is stored may be stored in an address of output_buf_ptr |
| 34 | Output_buf_ptr += Ouput_tile_offset | output_buf_ptr but_ptr may be updated to an address in which an output corresponding to the next tile is stored. |

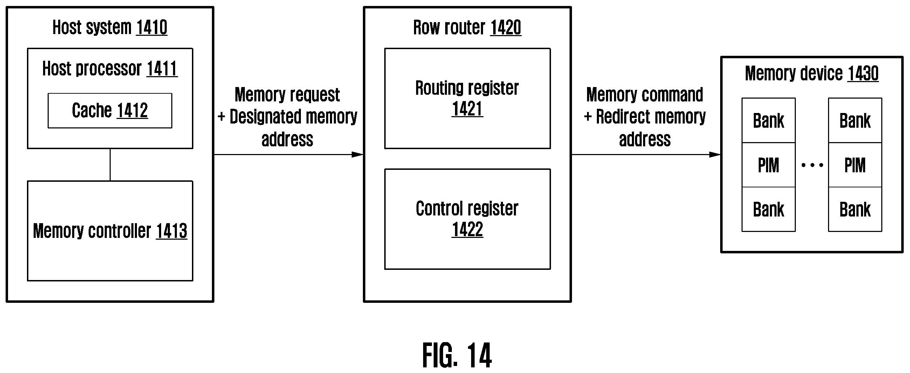

FIG. 14 is a diagram illustrating a row router that is separately provided from a host system and a memory device according to an embodiment.

Referring to FIG. 14, a row router 1420 may be provided separately from a host system 1410 and a memory device 1430. Additionally, in an embodiment, the row router 1420 may be included in a device or a system provided separately from the host system 1410 and the memory device 1430. The electronic device may include the row router 1420 that is separately provided, depending on the embodiment.

Since the host system 1410, a host processor 1411, a cache 1412, a memory controller 1413, the row router 1420, a routing register 1421, a control register 1422, and the memory device 1430 are described above, a repeated description is omitted. For example, the host system 1410 may be similar to host system 110, the host processor 1411 may be similar to the host processor 111, the cache 1412 may be similar to cache 112, the memory controller 1413 may be similar to memory controller 113, the row router 1420 may be similar to row router 121 or row router 240, the routing register 1421 may be similar to routing register 242, the control register 1422 may be similar to control register 241, and the memory device 1430 may be similar to memory device 230.

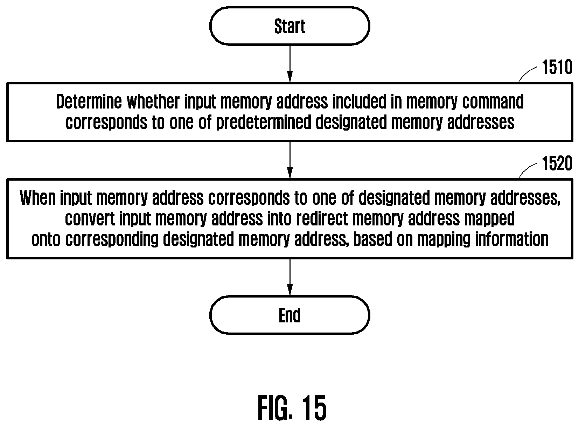

FIG. 15 is a diagram illustrating an operating method of an electronic device according to an embodiment.

Operations to be described hereinafter may be sequentially performed but not necessarily. For example, the order of the operations may change, and at least two of the operations may be performed in parallel. Operations 1510 and 1520 may be performed by at least one component (e.g., the host processor, the memory controller, the row router, and the memory device) of the electronic device.

In operation 1510, the electronic device determines whether an input memory address included in a memory command requested by the host processor corresponds to one of predetermined designated memory addresses.

In operation 1520, when the input memory address corresponds to one of the designated memory addresses, the electronic device converts the input memory address into a redirected memory address that is mapped to the corresponding designated memory address based on the mapping information stored in the routing register. The electronic device may determine whether the input memory address coincides with one of the designated memory addresses, and when the input memory address coincides with one of the designated memory addresses, the electronic device may convert the input memory address into the redirected memory address that is mapped to the coincided designated memory address and may output the redirected memory address. When the input memory address does not coincide with one of the designated memory addresses, the electronic device may output the input memory address. The electronic device may determine whether the input memory address corresponds to one of the designated memory addresses, based on some bits representing the input memory address. The electronic device may update a memory command to a **PIM** command mapped to the corresponding designated memory address based on the mapping information that maps each of the predetermined designated memory addresses to a redirected memory address and a PIM command to be executed at the redirected memory address.

The electronic device may select one from the input memory address and the mapped redirected memory address according to an activation signal for the routing register.

The mapping information may map each designated memory address representing a partial area of the memory to a redirected memory address representing another partial area of the memory. The memory command may be executed at the converted redirected memory address.

When PIM operations on a target PIM tile corresponding to the converted redirected memory address are performed, a plurality of redirected memory addresses stored in the routing register may be updated to a plurality of redirected memory addresses corresponding to a next PIM tile of the target PIM tile. The PIM operation corresponding to the memory command may be performed on the data at the converted redirected memory address.

The descriptions provided with reference to FIGS. 1 to 14 may be applicable to each operation shown in FIG. 15, and thus, detailed descriptions thereof have been omitted.

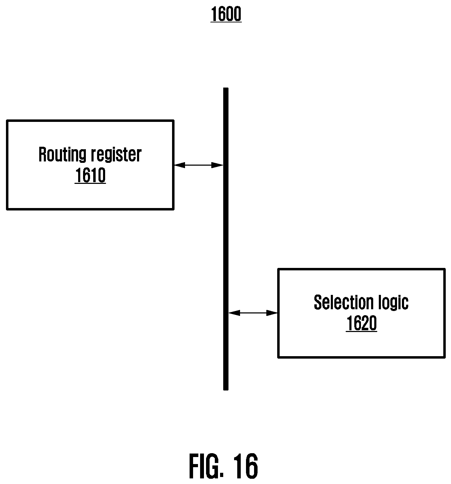

FIG. 16 is a diagram illustrating an electronic device according to an embodiment.

Referring to FIG. 16, an electronic device 1600 may include a routing register 1610 and a selection logic 1620. In addition, the electronic device 1600 may further include a control register.

The routing register 1610 may store the mapping information that maps each of predetermined designated memory addresses representing a partial area of the memory to a redirected memory address representing another partial area of the memory.

When an input memory address included in a memory command received from the host processor corresponds to one of the designated memory addresses, the selection logic 1620 may convert the input memory address into a redirected memory address that is mapped to the corresponding designated memory address based on the mapping information. The selection logic 1620 may select one from the input memory address and the mapped redirected memory address, according to an activation signal. The selection logic 1620 may select one of the input memory address and the mapped redirected memory address received from the routing register, based on the activation signal received from the control register. The selection logic 1620 may determine whether the input memory address coincides with one of the designated memory addresses, and when the input memory address coincides with one of the designated memory addresses, the electronic device may convert the input memory address into the redirected memory address that is mapped to the coincided designated memory address and may output the redirected memory address. When the input memory address does not coincide with one of the designated memory addresses, the electronic device may output the input memory address. The selection logic 1620 may determine whether the input memory address corresponds to one of the designated memory addresses, based on some bits of the input memory address. The selection logic 1620 may update the memory command to a PIM command that is mapped to the corresponding designated memory address, based on the mapping information.

The control register may transmit, to the selection logic 1620, an activation signal for the routing register.

In the memory, non-cacheable access to an area corresponding to the designated memory addresses may be allowed, and in the memory, cacheable access to an area corresponding to the redirected memory address may be allowed. The input memory address, the designated memory addresses stored in the routing register, and the redirected memory addresses may be expressed as row addresses. In the mapping information, each of the designated memory addresses may be one-to-one mapped to redirected memory addresses.

In addition, the electronic device 1600 may process the operations described above.

The embodiments described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or pseudo equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

As described above, although the embodiments have been described with reference to certain drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. An electronic device comprising:
a routing register configured to store mapping information that maps each of predetermined designated memory addresses representing a partial area of a memory to a redirected memory address representing another partial area of the memory; and
selection logic configured to, when an input memory address comprised in a memory command received from a host processor corresponds to one of the designated memory addresses, convert the input memory address into a redirected memory address that is mapped to the corresponding designated memory address based on the mapping information,
wherein the memory command is executed at the converted redirected memory address.

2. The electronic device of claim 1, wherein, when processing in memory, PIM, operations are performed on a target PIM tile of a PIM file corresponding to the converted redirected memory address, a plurality of redirected memory addresses stored in the routing register is updated to a plurality of redirected memory addresses corresponding to a next PIM tile of the PIM file.

3. The electronic device of claim 1 or 2, wherein a PIM operation corresponding to the memory command is performed on data at the converted redirected memory address.

4. The electronic device of one of claims 1 to 3, further comprising:
a control register configured to transmit, to the selection logic, an activation signal for the routing register,
wherein the selection logic selects one of the input memory address and the mapped redirected memory address according to the activation signal.

5. The electronic device of one of claims 1 to 4, wherein the selection logic is configured to:
determine whether the input memory address matches a given address among the designated memory addresses,
when the input memory address matches the given address, convert the input memory address into a redirected memory address that is mapped to the given address and output the redirected memory address, and
when the input memory address does not match the given address, output the input memory address.

6. The electronic device of one of claims 1 to 5, wherein the selection logic is configured to determine whether the input memory address corresponds to one of the designated memory addresses based on some bits of the input memory address.

7. The electronic device of one of claims 1 to 6, wherein the mapping information maps each of the predetermined designated memory addresses to the redirected memory address and a processing in memory, PIM, command to be executed at the redirected memory address, and
the selection logic is configured to update the memory command to a PIM command that is mapped to the corresponding designated memory address, based on the mapping information.

8. The electronic device of one of claims 1 to 7, wherein non-cacheable access to an area corresponding to the designated memory addresses is allowed in the memory, and
cacheable access to an area corresponding to the redirected memory address is allowed in the memory.

9. The electronic device of one of claims 1 to 8, wherein the input memory address, designated memory addresses stored in the routing register, and the redirected memory addresses are expressed as row addresses.

10. The electronic device of one of claims 1 to 9, wherein, in the mapping information, each of the designated memory addresses is one-to-one mapped to a redirected memory address.

11. The electronic device of one of claims 1 to 10, further comprising:
the host processor; and
a memory controller configured to generate the memory command in response to a memory request received from the host processor,
wherein the routing register and the selection logic are comprised in the memory controller, and
the memory receives the converted redirected memory address from the memory controller.

12. A method of operating an electronic device, the method comprising:
determining whether an input memory address comprised in a memory command received from a host processor corresponds to one of predetermined designated memory addresses; and
when the input memory address corresponds to one of the designated memory addresses, converting the input memory address into a redirected memory address that is mapped to the corresponding designated memory address, based on mapping information stored in a routing register,
wherein the mapping information maps each of the designated memory addresses representing a partial area of a memory to a redirected memory address representing another partial area of the memory, and
the memory command is executed at the converted redirected memory address.

13. The method of claim 12, wherein the converting into the redirected memory address comprises:
updating the memory command to a processing in memory, **PIM,** command that is mapped to the corresponding designated memory address, based on the mapping information that maps each of the predetermined designated memory addresses to the redirected memory address and a **PIM** command to be executed at the redirected memory address.

14. A non-transitory computer-readable storage medium storing instructions that, when executed by a processor, cause the processor to perform the method of claim 12.

15. A memory device comprising:
a routing register configured to store mapping information that maps each of predetermined designated memory addresses representing a first region of a memory to a redirected memory address representing a second other region of the memory; and
a selection logic configured to determine whether an input memory address received in a memory command corresponds to a given address among the designated memory addresses, based on some bits of the input memory address,
wherein the memory device executes the memory command at the input address when the input address does not correspond to the given address and otherwise executes the memory command at the redirected memory address.
